# EUROPÄISCHE PATENTANMELDUNG

(11) **EP 0 744 206 A2**
(43) Veröffentlichungstag der Anmeldung: **27.11.1996**
(21) Anmeldenummer: 96108078.5
(22) Anmeldetag: 21.05.1996
(51) Int. Cl.: B01D 53/14, B01D 53/44, B01D 53/04

(54) **Verfahren und Vorrichtung zum Reinigen von Inertgasen**

(30) Priorität: 22.05.1995 DE 19518797
(71) Anmelder: HOECHST AKTIENGESELLSCHAFT, 65929 Frankfurt am Main (DE)
(72) Erfinder: Roth, Peter, Dl., 65817 Eppstein (DE); Witt, Regina, Dl., 61118 Bad Vilbel (DE); Burschäpers, Joachim, Dr., 65795 Hattersheim (DE); Schadler, Norbert, Dr., 63811 Stockstadt (DE)

(57) **Zusammenfassung**

Die Erfindung betrifft ein Verfahren zur Reinigung eines Inertgases, bei dem man das Inertgas einer Sorptionsbehandlung unterzieht, insbesondere Gaswäschen. Erfindungsgemäß verdichtet man das Inertgas vor der Sorptionsbehandlung auf einen höheren Druck, führt die Sorptionsbehandlung bei diesem höheren Druck durch und entspannt anschließend das gereinigte Inertgas. Die Vorteile des Verfahrens sind im wesentlichen darin zu sehen, daß beispielsweise Abluftströme, die als Verunreinigungen leicht flüchtige Lösemittel, wie z.B. Chlormethyl, Isopropylchlorid oder Dichlormethan enthalten, bei geringerem Verbrauch an Energie und Waschflüssigkeit gereinigt werden können. Entsprechend können die Apparate kleiner dimensioniert werden.

## Beschreibung

Die Erfindung betrifft ein Verfahren zum Reinigen eines Inertgases, bei dem man das Inertgas einer Sorptionsbehandlung unterzieht.
Verfahren der genannten Art sind beispielsweise bekannt aus dem Werk von Menig: Luftreinhaltund durch Adsorption, Adsorption und Oxidation, S. 268-285, Deutscher Fachschriften-Verlag, Wiesbaden 1977 und werden häufig zur Reinigung von lösemittelhaltigen Abluftströmen eingesetzt, was meist auch mit der Rückgewinnung der Lösemittel als Wertstoff verbunden ist. Die Reinigung eines solchen Abluftstromes erfolgt häufig durch ein Sorptionsverfahren, vorzugsweise ein Absorptionsverfahren, auch als Wäsche bezeichnet, bei dem in bekannter Weise die lösemittelhaltige Abluft im Gegenstrom zu einer geeigneten Waschflüssigkeit durch eine Kolonne geleitet wird. Das oder die in der Abluft enthaltenen Lösemittel (Absorptiv) werden dabei in der Waschflüssigkeit (Solvent) absorbiert, die Abluft nicht bzw. nur wenig, weshalb sie hier bezüglich des Lösemittels als Inertgas bezeichnet wird. Die gereinigte Abluft, das Inertgas, gelangt über den Kopf der Kolonne in die Atmosphäre, wobei allerdings geringe Mengen an Waschflüssigkeit mitgeschleppt werden. Der beladenen Waschflüssigkeit werden in einer Regenerierstufe die Lösemittel entzogen, die dann als Wertstoffe wieder zur Verfügung stehen. Der Druck, bei dem die Absorption stattfindet (Absorptionsdruck), weicht dabei nur geringfügig, d. h. bis ca. 100 mbar, von dem Druck ab, bei dem die Abluft anfällt (Prozessdruck). Der Prozessdruck entspricht in der Regel dem Atmosphärendruck.

Dieses Verfahren ist jedoch für die Entfernung von leichtflüchtigen Stoffen wie Chlormethyl, Isopropylchlorid oder Dichlormethan aus Abluftströmen nur bedingt geeignet, da die Anforderungen, die die deutsche Technische Anleitung zur Reinhaltung der Luft an die Reinheit der Abluft nach der Wäsche stellt, für solche Stoffe nur mit hohem Aufwand zu erfüllen sind, wie z.B. durch eine Erhöhung der Trennstufenzahl der Absorptionskolonne, durch Nachschalten einer Adsorptionsstufe oder durch Vorschalten einer Kühlung bzw. Kondensationsstufe. Diese Maßnahmen verursachen hohe Investitionskosten, zusätzliche Betriebskosten und stoßen sehr schnell an physikalische oder technische Grenzen, wie z.B. die Eisbildung bei der Kühlung, das Erfordernis eines Wechselbetriebes zwischen Adsorptions- und Desorptionsbetrieb bei der zusätzlichen Adsorptionsstufe oder das Erfordernis von zu hohe Kolonnen, zu großen Wärmeaustauschflächen oder zu großen Umpumpmengen.

Der Erfindung liegt daher die Aufgabe zugrunde, ein Verfahren zu entwickeln, das die Abtrennung von leichtflüchtigen Stoffen verbessert und die genannten Nachteile vermeidet.

Erfindungsgemäß geschieht dies dadurch, daß man das Inertgas vor der Sorptionsbehandlung auf einen höheren Druck verdichtet, die Sorptionsbehandlung bei diesem höheren Druck durchführt und das gereinigte Inertgas entspannt.

Gegenstand der Erfindung ist somit ein Verfahren zum Reinigen eines Inertgases, bei dem man das Inertgas einer Sorptionsbehandlung unterzieht, dadurch gekennzeichnet, daß man das Inertgas vor der Sorptionsbehandlung auf einen höheren Druck verdichtet, die Sorptionsbehandlung bei diesem höheren Druck durchführt und das gereinigte Inertgas entspannt. Das Sorptionsverfahren kann hierin ein Adsorptionsverfahren sein, bei dem die aus dem Inertgas zu entfernenden Stoffe, beispielsweise Lösemittel, von einem Feststoff adsorbiert werden, oder ein Absorptionsverfahren, bei dem die Stoffe von einer Flüssigkeit absorbiert werden, oder ein Chemisorptionsverfahren, bei dem die Stoffe beispielsweise in einer Flüssigkeit chemisch gebunden werden. Der höhere Druck kann alle Werte von 1,1 bis 50 bar abs annehmen, aber auch darüberhinaus gehen. Bevorzugte Werte reichen von 1,2 bis 30 bar abs, besonders bevorzugte Werte von 1,5 bis 10 bar abs und ganz besonders bevorzugt von 2 bis 5 bar abs. Das Solvent kann vorteilhafterweise einen Glykolether oder eine Mischung aus unterschiedlichen Glykolethern enthalten bzw. im wesentlichen aus ihnen bestehen. Der oder die Glykolether sind vorzugsweise ausgewählt aus einer Gruppe bestehend aus Polyethylenglykol-Dimethylether, Tetraethylenglykol-Dimethylether, Pentaethylen-Dimethylether, Polyethylenglykol-Dibutylether und Diethylenglykol-Dibutylether. In einer weiteren Ausführungsform kann das Solvent in einer Regenerierstufe gereinigt werden. Die zur Verdichtung eingesetzte Energie kann mindestens teilweise zurückgewonnen werden, beispielsweise dadurch, daß das gereinigte Inertgas über eine Entspannungsturbine entspannt wird. In einer bevorzugten Ausführungsform kann das Inertgas nach der Verdichtung gekühlt werden, was zu einer teilweisen Kondensation führen kann. Dazu kann die bei der Entspannung des gereinigten Inertgases entstehende Kälte genutzt werden. Zur Verdichtung kann vorteilhafterweise ein Ringflüssigkeitsverdichter eingesetzt werden, bei dem das Absoptiv auch als Ringflüssigkeit dient. Das Verfahren eignet sich besonders zur Reinigung von Abluftströmen, die Lösemittel enthalten, deren Siedepunkt bei Normaldruck oberhalb von -10 °C liegt. Dies können beispielsweise sein: Acetate, Aldehyde, Alkohole, Amine, Amide, chlorierte Kohlenwasserstoffe, Ester, Ether, Formiate, Furane, Frigene, Wasser und zyklische Kohlenwasserstoffe.

Zur Durchführung des Verfahrens eignet sich besonders eine Vorrichtung, enthaltend einen Ringflüssigkeitsverdichter, dadurch gekennzeichnet, daß dem Verdichter ein Flüssigkeitsabscheider nachgeordnet ist, dessen Ausgang für die abgeschiedene Flüssigkeit mit dem Zulauf für die Ringflüssigkeit am Verdichter verbunden ist. In diese Vorrichtung kann auch eine Kühleinrichtung für die Flüssigkeit integriert sein.

Das erfindungsgemäße Verfahren ist auch mit einzelnen oder mehreren Merkmalen aus den Ausführungsformen oder aus den Ansprüchen 2 bis 9 beliebig kombinierbar.

Die Vorteile des erfindungsgemäßen Verfahrens sind im wesentlichen darin zu sehen, daß beispielsweise Abluftströme, die als Verunreinigungen leichtflüchtige Lösemittel aus den vorstehend aufgezählten Gruppen wie z.B. Chlormethyl, Isopropylchlorid oder Dichlormethan enthalten, bei geringerem Verbrauch an Energie und Waschflüssigkeit gereinigt werden können. Entsprechend können die Apparate kleiner dimensioniert werden. Durch die teilweise Kondensation und Ausschleusung von Lösemitteln nach der Verdichtung und vor der Absorption wird die Waschflüssigkeit entlastet. Als weitere Folge der Verdichtung wird weniger Waschflüssigkeit in die Atmosphäre geschleppt. Außerdem können vorhandene Waschanlagen leicht auf das erfindungsgemäße Verfahren umgerüstet werden, ohne daß dafür ein Betriebsstillstand erforderlich ist.

Im folgenden wird die Erfindung anhand eines in der einzigen Figur dargestellten Fließbildes in beispielsweiser Ausführung näher erläutert.

Ein lösemittelhaltiger Abluftstrom wird über einen Eingang 1 einem Vorverdichter 2 zugeführt und anschließend über eine Leitung 21 einem Nachverdichter 18, der vorzugsweise ein Ringflüssigkeitsverdichter ist. In dem Nachverdichter 18 wird der Abluftstrom auf den Absorptionsdruck verdichtet, wobei bereits ein Teil der Lösemittel auskondensiert. Dieses Kondensat wird in einem Abscheider 19 von der Abluft getrennt und über einen Kühler 20 dem Nachverdichter 18 als Ringflüssigkeit rückgeführt. Überschüssiges Lösemittel wird über eine Leitung 23 abgezogen. Die verdichtete Abluft gelangt dann über eine Leitung 3 zu einem Kondensator 4, in dem sie gekühlt werden kann, bevor sie über eine Leitung 5 und einen weiteren Kondensator 25 in eine Absorptionskolonne 6 unten eingespeist wird. Das im Kondensator 4 bzw 25 anfallende Kondensat wird über eine Leitung 17 bzw 26 abgezogen. In der Absorptionskolonne 6 wird die verdichtete Abluft von unten nach oben geführt und dabei durch eine Waschflüssigkeit, die im Gegenstrom von oben nach unten geführt wird, von den Lösemitteln gereinigt. Als Absorptionskolonnen eignen sich vorzugsweise Packungskolonnen, Bodenkolonnen, Strahlwäscher oder Fallfilmabsorber. Die beladene Waschflüssigkeit wird über eine Leitung 14 aus der Absorptionskolonne 6 abgezogen und in einer Regeneriereinrichtung 15 von den Lösemitteln gereinigt. Diese verlassen die Regeneriereinrichtung 15 durch einen Ausgang 22. Die gereinigte Waschflüssigkeit wird der Absorptionskolonne 6 über eine Leitung 16 oben wieder zugeführt. Die gereinigte Abluft wird der Absorptionskolonne 6 am Kopf an einem Ausgang 7 entnommen und wahlweise über eine Leitung 8, ein Entspannungsventil 9, den Kondensator 4 und eine Leitung 13 oder über eine Leitung 10, ein Ventil 11, eine Entspannungsturbine 24 und eine Leitung 12 in die Atmosphäre entlassen. Auf dem Weg über das Entspannungsventil 9 wird die für die den Betrieb des Kondensators 4 erforderliche Kälte erzeugt, während auf dem Weg über die Entspannungsturbine 24 ein Teil der zur Verdichtung aufgewendeten Energie dadurch zurückgewonnen wird, daß die Entspannungsturbine 24 mit dem Vorverdichter 2 verbunden ist, und diesem so Energie zuführen kann. Die Ventile 9 und 11 sind dabei so miteinander gekoppelt, daß höchstens eines von beiden offen ist.

Das erfindungsgemäße Verfahren wird weiter durch ein Vergleichs- und ein Ausführungsbeispiel beschrieben.

### Vergleichsbeispiel

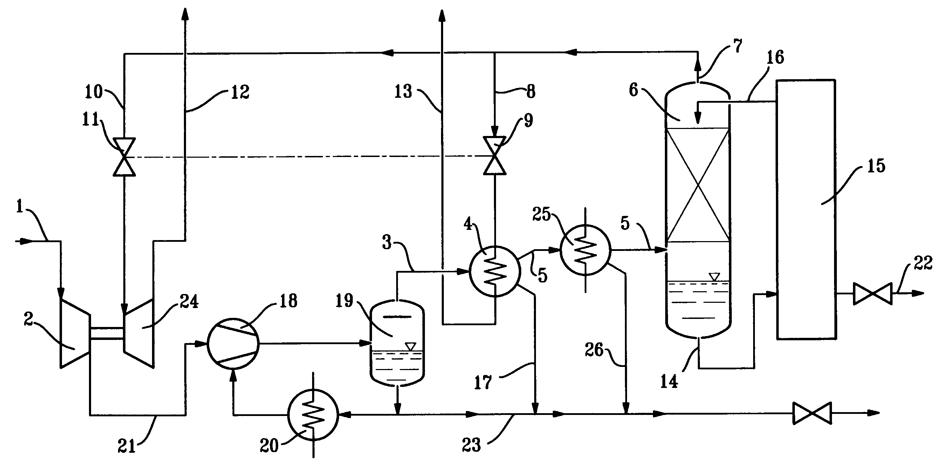

Ein Abluftstrom mit einer Temperatur von 20 °C und einem Absolutdruck von 1 bar, enthaltend 1000 kg/h Luft und 42,5 kg/h Dichlormethan, entsprechend einer Konzentrationvon von ca. 47 g/m³, wurde mit einem Absorptionsverfahren wie in Fig. 1, jedoch ohne Verdichtungsstufe und dementsprechende Energierückgewinnung, gereinigt. Als Waschflüssigkeit wurde Polyethylenglykol-Dimethylether eingesetzt. Die Konzentration an Dichlormethan im gereinigten Abluftstrom betrug 0,93 g/m³.

### Ausführungsbeispiel

Der gleiche Abluftstrom wie im Vergleichsbeispiel, jedoch mit einer Dichlormethankonzentration von 193 g/m³ wurde nach dem erfindungsgemäßen Druckabsorptionsverfahren bei 3 bar abs gereinigt. Die Konzentration an Dichlormethan lag nach der Verdichterstufe und vor der Kolonne bei 158 g/m³. Im gereinigten Abluftstrom lag sie unter der Nachweisgrenze.

Im folgenden wird das Einsparungspotential betreffend Energie und Waschflüssigkeit anhand zweier Berechnungen nachgewiesen.

Verbrauch mit Verfahren entsprechend Stand der Technik:

Die Berechnung behandelt einen Abluftstrom mit einer Temperatur von 20 °C und einem Absolutdruck von 1 bar, enthaltend 1000 kg/h Luft, 200 kg/h Dichlormethan und 75 kg/h 2-Propanol. Es wurde das Absorptionsverfahren entsprechend dem Stand der Technik wie im Vergleichsbeispiel gerechnet. Als Waschflüssigkeit wurde Polyethylenglykol-Dimethylether angenommen.

Die geforderte Höchstkonzentration an Dichlormethan nach der Wäsche beträgt 30 ppm, die an 2-Propanol 100 ppm.

Es wurden Rechnungen mit unterschiedlichen Trennstufenzahlen durchgeführt. Die nachstehende Tabelle zeigt die Zahl der Trennstufen der Absorptionskolonne sowie deren Höhe und die wesentlichen Energien, die für die Behandlung der Waschflüssigkeit benötigt werden.

| | | | |
|---|---|---|---|
| Zahl der Trennstufen | 10 | 6 | 4 |
| Höhe der Kolonne [m] | 14 | 9 | 7 |
| Mengenstrom an Waschflüssigkeit [kg/h] | 2300 | 3000 | 5700 |
| Verbrauch an Kälteenergie* [kW] | 27 | 35 | 67 |
| Verbrauch an Regenerierungsenergie** [kW] | 14,2 | 18,5 | 35,2 |
| Summe Energieverbrauch [kW] | 41,2 | 53,5 | 102,2 |

| | | | |
|---|---|---|---|
| * Energie zur Kühlung der Waschflüssigkeit von 30 auf 10 °C | | | |
| ** Energie zur Aufwärmung der Waschflüssigkeit von 140 auf 150 °C | | | |

Verbrauch mit erfindungsgemäßen Verfahren:

Der gleiche Abluftstrom wurde nach dem erfindungsgemäßen Verfahren gerechnet. Dabei wurde angenommen, daß der Abluftstrom durch eine Verdichtung auf einen Absolutdruck von 3 bar auf die gleiche Reinheit gebracht und die gereinigte Abluft zur Kühlung genutzt wird. Die nachstehende Tabelle zeigt entsprechend die Mengen- und Energiebilanz.

| | | | |
|---|---|---|---|
| Zahl der Trennstufen | 10 | 6 | 4 |
| Höhe der Kolonne [m] | 14 | 9 | 7 |
| Mengenstrom an Waschflüssigkeit [kg/h] | 1200 | 1400 | 2200 |
| Verbrauch an Kälteenergie* [kW] | 14 | 16 | 26 |
| Verbrauch an Regenerierungsenergie** [kW] | 7,4 | 8,6 | 13,6 |
| Verbrauch an Kompressionsenergie [kW] | 50 | 50 | 50 |
| Summe Energieverbrauch [kW] | 71,4 | 74,6 | 89,6 |

| | | | |
|---|---|---|---|
| * Energie zur Kühlung der Waschflüssigkeit von 30 auf 10 °C | | | |
| **Energie zur Aufwärmung der Waschflüssigkeit von 140 auf 150 °C | | | |

Im Kondensator vor der Absorptionskolonne fallen dabei 38 kg/h Dichlormethan und 53 kg/h 2-Propanol an.

Aus den Rechnungen geht folgendes hervor:

Der Bedarf an Waschflüssigkeit ist bei der Absorption ohne Verdichtung nahezu doppelt so groß wie bei der Absorption mit Verdichtung. Dies bewirkt größere Apparateabmessungen - insbesondere sind hiervon im Waschkreislauf befindliche Wärmeaustauscher betroffen.

Der Energiebedarf für Kälte und Regenerierung ist bei der Absorption mit Verdichtung deutlich geringer; bei kleiner Trennstufenzahl (Bauhöhe) auch unter Berücksichtigung der Kompressionsenergie.

Weitere Vorteile sind:

Die Kondensation von ca. 91 kg/h Lösemittel (38 kg/h Dichlormethan + 53 kg/h 2-Propanol) vor der Absorptionskolonne. Dieser Anteil gelangt nicht in die Waschflüssigkeit und entlastet somit die Regeneriereinrichtung. Die energetischen und apparativen Vorteile hieraus sind in der Rechnung nicht berücksichtigt.

Die Verluste an Waschflüssigkeit durch Desorption in die Abluft sind bei der Absorption mit Verdichtung niedriger.

## Patentansprüche

1. Verfahren zum Reinigen eines Inertgases, bei dem man das Inertgas einer Sorptionsbehandlung unterzieht, dadurch gekennzeichnet, daß man das Inertgas vor der Sorptionsbehandlung auf einen höheren Druck verdichtet, die Sorptionsbehandlung bei diesem höheren Druck durchführt und das gereinigte Inertgas entspannt.

2. Verfahren nach Anspruch 1, dadurch gekennzeichnet, daß das Inertgas lösemittelhaltige Abluft ist.

3. Verfahren nach Anspruch 1 oder 2, dadurch gekennzeichnet, daß das Sorptionsverfahren ein Absorptionsverfahren mit einem flüssigen Solvent ist.

4. Verfahren nach Anspruch 3, dadurch gekennzeichnet, daß das Solvent einen Glykolether oder eine Mischung aus Glykolethern enthält, die vorzugsweise ausgewählt sind aus einer Gruppe bestehend aus Polyethylenglykol-Dimethylether, Tetraethylenglykol-Dimethylether, Pentaethylen-Dimethylether, Polyethylenglykol-Dibutylether und Diethylenglykol-Dibutylether.

5. Verfahren nach Anspruch 3 oder 4, dadurch gekennzeichnet, daß das Solvent nach der Sorptionsbehandlung in einer Regenerierstufe gereinigt wird.

6. Verfahren nach einem oder mehreren der Ansprüche 1 bis 5, dadurch gekennzeichnet, daß die zur Verdichtung eingesetzte Energie nach der Sorptionsbehandlung mindestens teilweise zurückgewonnen wird.

7. Verfahren nach einem oder mehreren der Ansprüche 1 bis 7, dadurch gekennzeichnet, daß das Inertgas nach der Verdichtung gekühlt wird.

8. Verfahren nach Anspruch 7, dadurch gekennzeichnet, daß zur Kühlung die bei der Entspannung entstehende Kälte genutzt wird.

9. Verfahren nach einem oder mehreren der Ansprüche 1 bis 8, dadurch gekennzeichnet, daß das Inertgas auf einen Absolutdruck aus dem Bereich von 1,1 bis 50 bar abs verdichtet wird.

10. Verwendung eines Glykolethers, vorzugsweise ausgewählt aus einer Gruppe bestehend aus Polyethylenglykol-Dimethylether, Tetraethylenglykol-Dimethylether, Pentaethylen-Dimethylether, Polyethylenglykol-Dibutylether, zur Durchführung des Verfahrens nach einem oder mehreren der Ansprüche 1 bis 9.

11. Verwendung eines Ringflüssigkeitsverdichters zur Durchführung des Verfahrens nach einem oder mehreren der Anspruch 1 bis 9.

12. Vorrichtung zur Durchführung des Verfahrens nach einem oder mehreren der Ansprüche 1 bis 9, enthaltend einen Ringflüssigkeitsverdichter (18), dadurch gekennzeichnet, daß dem Verdichter (18) ein Flüssigkeitsabscheider (19) nachgeordnet ist, dessen Ausgang für die abgeschiedene Flüssigkeit mit dem Zulauf für die Ringflüssigkeit am Verdichter (18) verbunden ist.

13. Verwendung einer Vorrichtung nach Anspruch 12 zur Durchführung des Verfahrens nach einem oder mehreren der Ansprüche 1 bis 9.
